# EUROPEAN PATENT SPECIFICATION

(11) **EP 1 363 426 B1**
(45) Date of publication and mention of the grant of the patent: **11.04.2007**
(21) Application number: 02700604.8
(22) Date of filing: 19.02.2002
(51) Int. Cl.: H04L 12/46, H04Q 11/04, H04J 3/16

(54) **MULTIPLEXING RELAY TRANSMISSION DEVICE**
MULTIPLEX-RELAIS-ÜBERTRAGUNGSEINRICHTUNG
DISPOSITIF DE TRANSMISSION A RELAIS MULTIPLEXEUR

(30) Priority: 19.02.2001 JP 2001041481
(43) Date of publication of application: 19.11.2003
(73) Proprietor: NIPPON TELEGRAPH AND TELEPHONE CORPORATION, Tokyo 100-8116 (JP); NTT ELECTRONICS CORPORATION, Tokyo 150-0043 (JP)
(72) Inventor: MATSUURA, Akihiko, c/o NTT Intell. Property Center, Musashino-shi, Tokyo180 -8585 (JP); KATAOKA, Tomoyoshi, NTT Intell. Property Center, Musashino-shi, Tokyo180 -8585 (JP); TOMIZAWA, Masahito, NTT Intell. Property Center, Musashino-shi, Tokyo180 -8585 (JP); YAMADA, Y., NTT Electr.Corp., Intell. Property Dep, Tokyo 150-0043 (JP); AISAWA, S., NTT Electr. Corp., Intell. Prop. Dep., Tokyo 150-0043 (JP); HAMADA, Y., NTT Electr. Corp., Intell. Prop. Dep., Tokyo 150-0043 (JP)
(74) Representative: Hoffmann, Eckart
(86) International application number: PCT/JP2002/001432
(87) International publication number: WO 2002/067508

(56) References cited:
- EP-A- 0 982 900
- CA-A1- 2 298 732
- JP-A- 10 247 882
- JP-A- 10 322 298
- JP-A- 2000 115 108
- JP-A- 2000 115 109
- JP-A- 2001 045 069
- US-A- 5 757 806
- US-A- 6 111 871

## Description

### TECHNICAL FIELD

The present invention relates to a multiplexing repeater having an high-speed optical interface (for example, an OTU (Optical Transport Unit) interface of OTN (Optical Transport Network) which is used to dramatically widen the service area of a low-speed interface (for example, Gigabit Ethernet (hereinafter referred to as "GbE").

### PRIOR ART

Physical interfaces of GbE and other LAN Ethernets are limited in distance range, and the maximum range is approximately 5 km in 1000BASE-LX.

The connection between two LANs spaced more than a prescribed distance apart is established by a SONET (Synchronous Optical Network/SDH (Synchronous Digital Hierarchy) repeater including a router or switch which has a POS (Packet Over SONET) or EOS (Ethernet over SONET) interface-this raises network costs and constitutes an obstacle to implementation of a broad-band network accordingly.

Recently there have been realized techniques which overcome the limitation on the distance range by use of an interface converter for the GbE signal, but network monitoring is difficult because the SONET/SDH repeater is not used.

On the other hand, new network node interface specifications are now under discussion in ITU-T (International Telecommunication Union Telecommunication Standardization Sector) with the objectives of securing transparency and management of a WDM (Wavelength Division Multiplex) system. These specifications will be approved as an ITU-T G. 709 Recommendation in February, 2001. The use of the specifications enables implementation of a network system which permits network monitoring but is simple-structured and low-cost as compared with the SONET/SDH frame structure. Moreover, a WDM network can also be implemented which is effective in reducing the network cost and manageable.

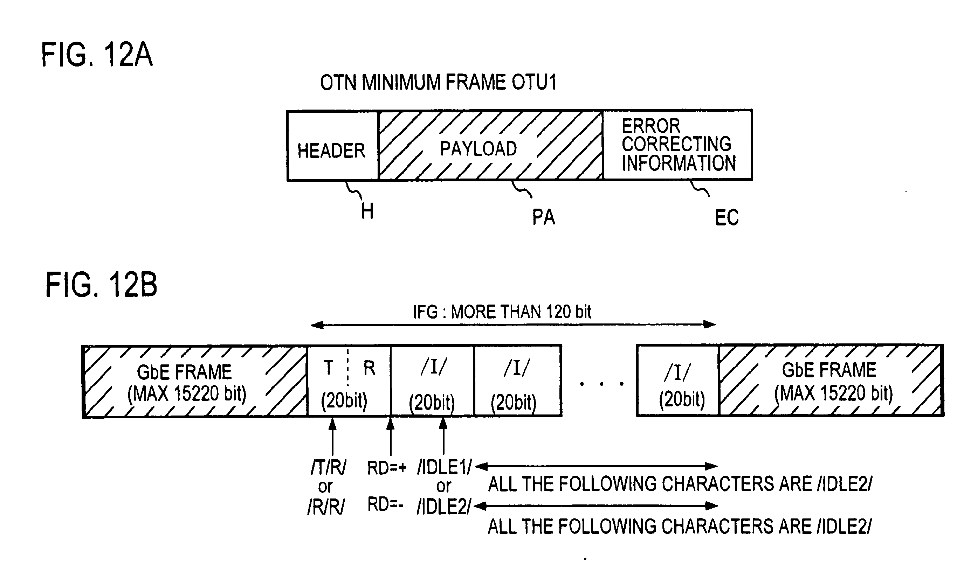

The payload rate of the minimum frame OTUI (Optical Transport Unitl) which is used in a network OTN formed by the repeater of the new specifications, shown in Fig. 12A, is 2.48832 Gbit/s. Mapping of a 1.25-Gbit/s GbE signal of Fig. 12B over the OTUI payload PA reduces the band utilization factor down to as low as about 50%. Accordingly, a technique of multiplexing GbE signals of two channels and mapping the multiplexed signal over the payload is effective in cost reduction.

However, since simple multiplexing of GbE signals of two channels increases the bit rate up to 2.5 Gbit/s in excess of the payload rate of the OTU1 signal, a mechanism for rate conversion is necessary. Since a complex multiplexing mechanism would raise the system cost, however, it is also necessary to simplify the multiplexing mechanism as much as possible.

The document US-A-5,757,806 describes a data multiplexing system, wherein plural channels of low-speed signals are inserted into respectively allotted time slots of a high-speed channel and vice versa.

The document CA-A1-2 298 732 discloses a high speed data transport of Ethernet frame using the SONET/SDH technology, wherein the data rate, 10.0 Gb/s, is decreased by compression of inter-frame gaps (IFG).

The document US-A-6,111,871 relates to a transmission technology for reducing the bandwidth in an ATM network, wherein headers of transmitting ATM cells are compressed by an ATM switch at a transmitting side, and headers of the cells are recovered by an ATM switch at a receiving side, whereby the traffic load is reduced and the processing capacity at ATM switches is enhanced.

The document EP-A-0 982 900 describes an interconnection between a WAN for transport through a wide-range-large-capacity synchronous digital network and a LAN whose data rate differs from that of the WAN, wherein a rate adaption means is provided which instructs to delay transmission to Ethernet frame switch when a buffer is overloaded because of disagreement in transmission rate.

### DISCLOSURE OF THE INVENTION

An object of the present invention is to provide a multiplexing repeater which permits rate conversion with a simple configuration.

This object is achieved by a multiplexing repeater as claimed in claim 1. Preferred embodiments of the invention are subject-matter of the dependent claims.

To implement the multiplexing repeater according to the present invention, it is necessary to solve three problems in the case of multiplexing GbE signals and mapping the multiplexed signal over the OTU1 frame: (a) clock switching, (b) mapping over the OTU1 frame, and (c) channel identification.

The problem (a) concerns clock switching at the time when plural GbE signals operating asynchronously are mapped over the OTU frame.

The problem (b) concerns how to deal with an excess or shortage of data when the bit rate of the multiplexed GbE signal does not coincide with the bit rate of the OTU payload.

The problem (c) concerns channel identification at the time of demultiplexing the multiplexed GbE signal.

Another problem is that if two-channel GbE signals of a 1.25-Gbit/s are multiplexed unconditionally, the bit rate of the multiplexed signal becomes 2.5 Gbit/s, which is higher than 2.48832-Gbit/s that is the payload bit rate of the OTU1 signal defined by the ITU-T G. 709 Recommendation when the OTU1 frame specified in G. 709 is configured unconditionally. To meet the G. 709 Recommendation, it is necessary that the bit rate of the GbE signal be reduced about 0.5%.

With the claimed arrangement, even if the bit rate of each low-speed transmission signal is higher than the payload bit rate of the high-speed optical transmission signal, the low-speed transmission signals of two channels can be multiplexed and carried by the high-speed optical transmission signal without data discarding. Even if the double of the bit rate of the low-speed transmission signal is higher than the payload bit rate of the high-speed optical transmission signal, it is possible to generate the low-speed transmission signal without exhausting data in each FIFO memory of the transmitting part.

In said multiplexing repeater, said first and second control means can be formed as means for detecting that the occupancy rate of said first and second FIFO memories respectively corresponding thereto exceed a first predetermined value and for responding to the outputting of said special code detection signals by said first and second code detecting means to inhibit said special codes in said first and second low-speed transmission signals from being written in said first and second FIFO memories.

In said multiplexing repeater, said third and fourth control means can be formed as means for detecting that the occupancy rates of said third and fourth FIFO memories respectively corresponding thereto are below a second predetermined value and for responding to the outputting of said special code detection signals by said third and fourth code detecting means to inhibit readout of said third and fourth FIFO memories and insert special codes from said special code generating means into said third and fourth low-speed transmission signals.

In said multiplexing repeater, said receiving part may be configured to includes:
first and second code generating means for generating special codes;
first and second selectors for selectively providing the outputs from said third and fourth FIFO memories and the special codes from said first and second code generators to said low-speed interface;
first and second inter-frame gap detecting means for detecting inter-frame gaps in said third and fourth low-speed transmission signals read out of said third and fourth FIFO memories and for outputting detection signals; and
third and fourth control means for temporarily inhibiting reading out said third and fourth FIFO memories in accordance with the detected outputs from said first and second inter-frame gap detecting means and the occupancy rates of said third and forth FIFO memories and for controlling said first and second selectors to insert said special codes generated by said first and second code generating means into said third and fourth low-speed transmission signals.

With the above arrangement, the inter-frame gaps of the low-speed transmission signals to be sent from said low-speed interface can be held at a value equal to or greater than a predetermined number of bits.

In said multiplexing repeater, said receiving part further includes fifth and sixth FIFO memories in which signals read out of said third and fourth FIFO memories are written and from which the signals written therein are read out and output to said first and second selectors; said first and second inter-frame gap detecting means includes means for counting codes during the periods of the inter-frame gaps of said third and fourth low-speed transmission signals read out of said third and fourth FIFO memories; and when the count values are smaller than predetermined values, said third and fourth control means inhibit readout of said fifth and sixth FIFO memories and control said first and second selectors to insert said special codes generated by said first and second code generating means into said third and fourth low-speed transmission signals.

With the above arrangement, the inter-frame gaps of the low-speed transmission signals to be mapped over the high-speed optical transmission signal can be held at a value equal to or greater than a predetermined number of bits.

For channel identification in the case of multiplexing low-speed transmission signals, the logic of one of them is inverted prior to multiplexing at the transmitting side. At the receiving side a signal extracted from the OTU1 frame is demultiplexed by a demultiplexing circuit, after which channel identification is carried out by deciding the logic of special codes in a channel identification circuit.

### BRIEF DESCRIPTION OF THE DRAWINGS

Fig. 1 is a block diagram of a transmitting part in a first embodiment of the multiplexing repeater according to the present invention.
Fig. 2 is a block diagram of a receiving part in the first embodiment of the multiplexing repeater according to the present invention.
Fig. 3 is a block diagram of a transmitting part in a second embodiment of the multiplexing repeater according to the present invention.
Fig. 4 is a block diagram of a receiving part in the second embodiment of the multiplexing repeater according to the present invention.
Fig. 5 is a block diagram of a channel selecting circuit in the second embodiment.
Fig. 6 is a block diagram of a transmitting part in a third embodiment of the multiplexing repeater according to the present invention.
Fig. 7 is a block diagram of a receiving part in the third embodiment of the multiplexing repeater according to the present invention.
Fig. 8 is a block diagram of a receiving part in a fourth embodiment of the multiplexing repeater according to the present invention.
Fig. 9 is a block diagram of a transmitting part in a fifth embodiment of the multiplexing repeater according to the present invention.
Fig. 10 is a block diagram of a transmitting part in a sixth embodiment of the multiplexing repeater according to the present invention.
Fig. 11 is a block diagram of a receiving part in the sixth embodiment of the multiplexing repeater according to the present invention.
Fig. 12A is a diagram showing an OTN signal frame configuration.
Fig. 12B is a diagram showing a GbE signal frame configuration.

### BEST MODE FO CARRYING OUT THE INVENTION

### FIRST EMBODIMENT

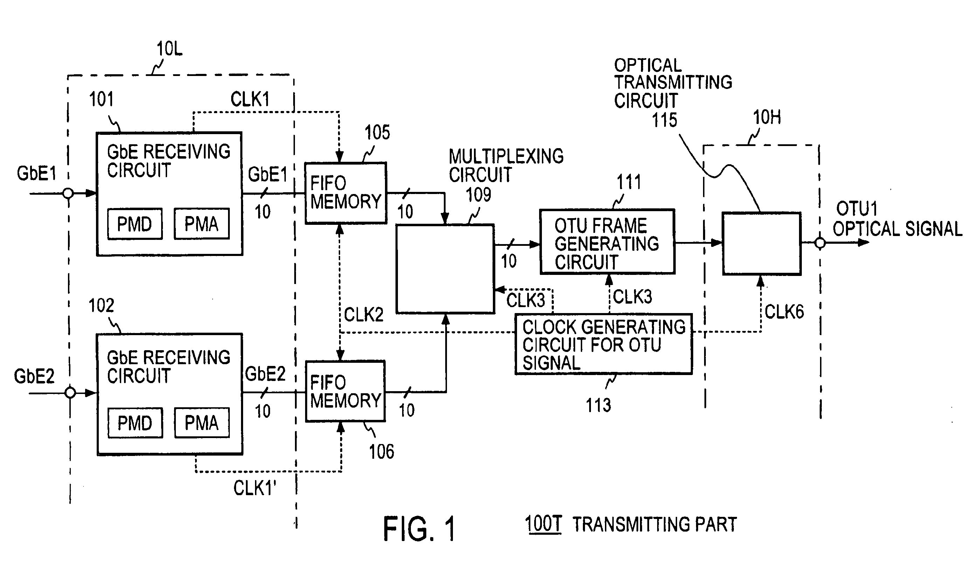

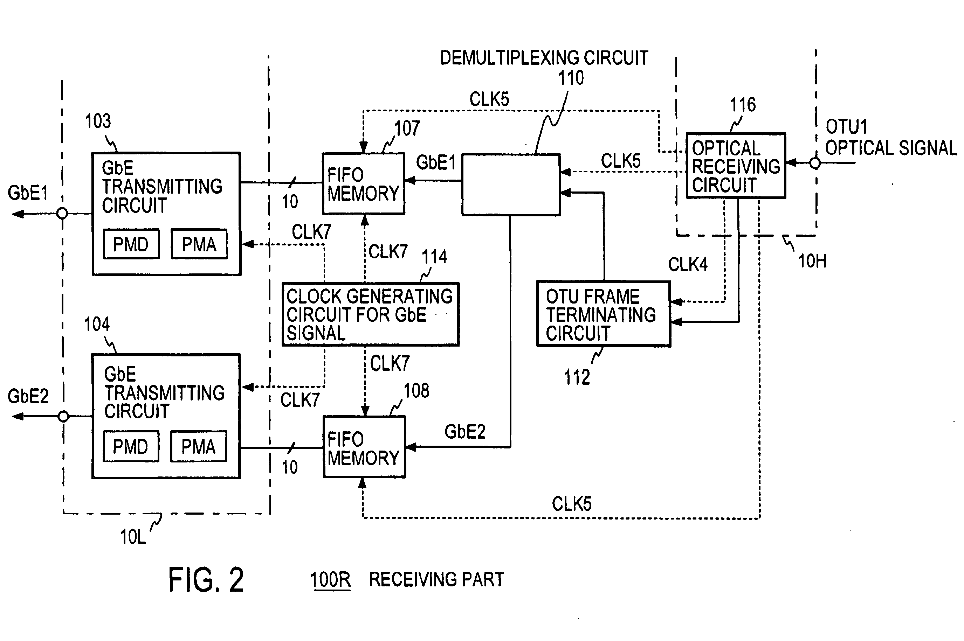

Figs. 1 and 2 illustrate a transmitting part 100T and a receiving part 100R of the multiplexing repeater according to the present invention which connects an IEEE802.3z-defined low-speed transmission network and an ITU-T G. 709-defined high-speed optical transfer network.

In the transmitting part 100T shown in Fig. 1, blocks 101 and 102 are each a GbE receiving circuit of a 1000BASE-X physical layer device (PHY) specified by the IEEE802.3z Recommendation. PHY is made up of a physical media dependent (PMD) and a physical media attachment (PMA). Blocks 103 and 104 in the receiving part 100R shown in Fig. 2 are also GbE transmitting circuits of the 1000BASE-X physical layer device specified by the IEEE802.3z Recommendation.

The blocks 105 and 106 are FIFO memories which can be written into by clocks CLK1 and CLK1'asynchronous to each other and can be read out by a clock CLK2 different from them. A block 109 is a 2:1 multiplexing circuit which multiplexes GbE signals of two channels. A block 111 is an OTU frame generating circuit which maps an input signal over the payload of an OTU1 signal frame specified in ITU-T G. 709. A block 115 is an optical transmitting circuit which converts an OTU1 electrical signal, generated by the OTU frame generating circuit, into an OTU1 optical signal.

A block 113 is a clock generating circuit for OTU signal, which supplies each of the multiplexing circuit 109 and the OTU frame generating circuit 111 with a clock CLK3 (frequency f1) of frequency f1, the optical transmitting circuit 115 with a clock CLK6 of a frequency f2, and each of the FIFO memories 105 and 106 with a clock CLK2 of a frequency f1/2 as a readout clock.

In the receiving part 100R of Fig. 2, a block 110 is a demultiplexing circuit which demultiplexes an OTU1 payload signal in a 1:2 ratio. A block 114 is a clock generating circuit for GbE signal which supplies each of GbE transmitting circuits 103 and 104 with a clock CLK7 of a frequency f7 and each of FIFO memories 107 and 108 with a readout clock CLK7 of a frequency f2. A block 116 is an optical receiving circuit which converts an OTU1 optical signal into an electrical signal. A block 112 is an OTU frame terminating circuit which decodes the OTU1 payload signal from the OTU1 signal fed from the optical receiving circuit 116.

The GbE receiving circuits 101 and 102 in Fig. 1 and the GbE transmitting circuits 103 and 104 in Fig. 2 constitute a low-speed interface 10L of the multiplexing repeater, and the optical transmitting circuit 115 in Fig. 1 and the optical receiving circuit 116 in Fig. 2 constitute a high-speed optical interface 10H of the multiplexing repeater.

Next, a description will be given of the operation of the multiplexing repeater.

### Transmitting Part 100T (Fig. 1)

GbE signals 1 and 2 of two channels input to the GbE receiving circuits 101 and 102, which are asynchronous to each other, are written in the FIFO memories 105 and 106, respectively. The write clocks in this case are the clocks (CLK1, CLK1') extracted from the GbE signals 1 and 2 input to the GbE receiving circuits 101 and 102. The GbE signal 1 and 2 (hereinafter denoted by GbE 1 and GbE2 in the drawings) written in the FIFO memories are read out therefrom using the common clock CLK2 of the frequency f1/2 which is generated asynchronous to the clocks CKL1 and CKL1' in the clock generating circuit for OTU signal. At this time, clock switching takes place.

The thus read-out GbE signals 1 and 2 are multiplexed by the multiplexing circuit 109, and the multiplexed output is provided to the OTU frame generating circuit 111, wherein it is mapped over the payload of the OTU1 frame shown in Fig. 12A. The OTU1 signal frame is composed of a header H, a payload PA and error correcting information EC as depicted in Fig. 12A. The OTU1 signal with the GbE signals 1 and 2 stored in the payload is converted, in synchronization with the clock CLK6 of frequency f2, by the optical transmitting circuit 115 into an optical signal, which is output from this invention apparatus.

The ITU-T G. 709 Recommendation specifies that the OTU1 transmission rate is 256/237 times higher than the payload rate. The clock generating circuit 113 for OTU signal generates the clock CLK3 of the frequency f1 equal to the payload rate and the clock CLK6 of the frequency f2 equal to the OTU1 signal transmission rate.

### Receiving Part 100R (Fig. 2)

On the other hand, an OTU 1 optical signal received by the optical receiving circuit 116 is converted to an electrical signal, which is applied to the OTU frame terminating circuit 112 to decode a 2-channel GbE signal stored in the payload. This signal is demultiplexed by the demultiplexing circuit 110. The demultiplexed GbE signals 1 and 2 of two channels are written to FIFO memories 107 and 108, respectively, using a clock CLK5 which is synchronized with a clock CLK4 extracted from the OTU I signal. The frequency of the clock CLK4 is f2 equal to the OTU1 signal transmission rate, and the frequency of the clock CLK5 is f1 equal to the payload rate. The GbE signals 1 and 2 thus written in the FIFO memories 107 and 108 are read out therefrom using the clock CLK7 generated asynchronous to the clock CLK5 by the clock generating circuit 114 for GbE signal, and output as GbE signals 1 and 2 via GbE transmitting circuits 103 and 104.

The above is the operation of Embodiment 1 of the multiplexing repeater according to the present invention. As described above, in the transmitting part 100T the input GbE signals are written to the FIFO memories 105 and 106 by use of asynchronous clocks CKL 1 and CKL1' extracted from the input GbE signals in the GbE receiving circuits 101 and 102, respectively. The thus written GbE signals are read out by the common clock CLK2 synchronized with the OTU 1 signal, by which clock switching is carried out. Similarly, in the receiving part 100R the GbE signal extracted from the payload of the OTU frame is written in the FIFO memories 107 and 108 by use of the clock CLK5 extracted from the input OTU signal in the receiving circuit 116. The thus written GbE signal is read out by the clock CLK 7 generated by the clock generating circuit for GbE signal, by which the clock CLK5 is switched to the clock CLK7.

### SECOND EMBODIMENT

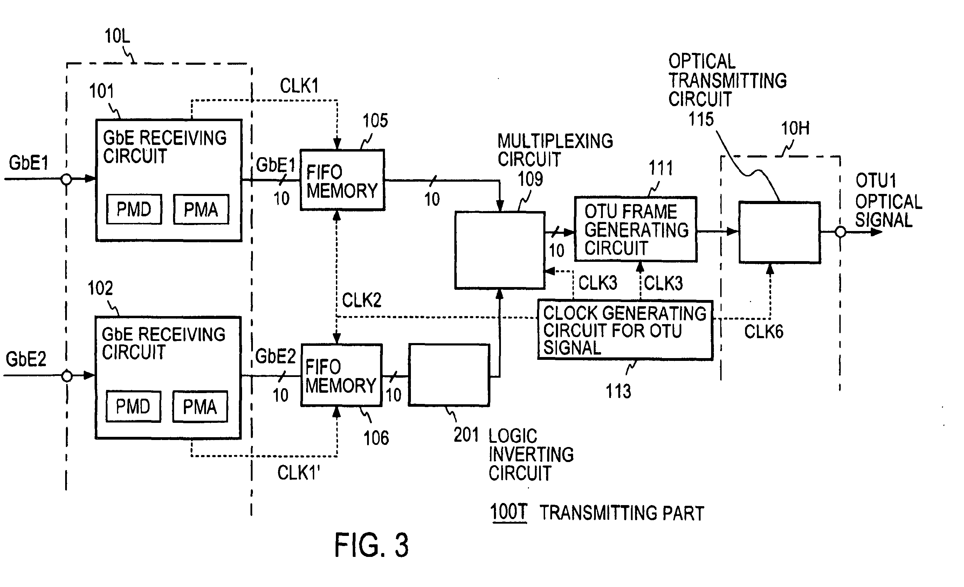

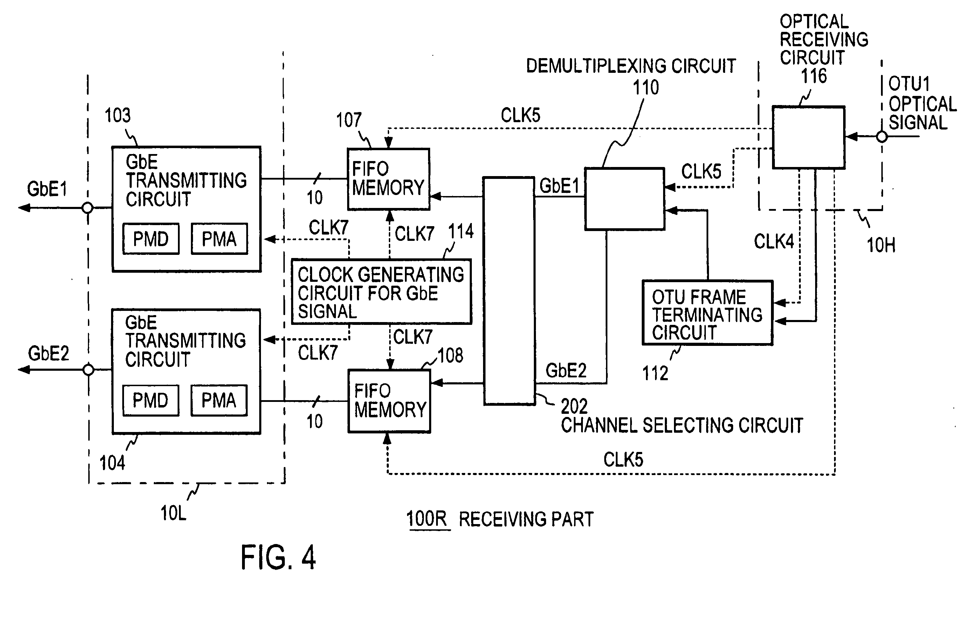

Figs. 3 and 4 illustrate the transmitting part 100T and the receiving part 100R in the second embodiment of the multiplexing repeater according to the present invention. The second embodiment is a modified form of the multiplexing repeater according to the first embodiment of Figs. 1 and 2, in which a logic inverting circuit 201 is inserted between the output of the FIFO memory 106 and the multiplexing circuit 109 in the transmitting part 100T and a channel selecting circuit 202 is inserted between the demultiplexing circuit 110 and the FIFO memories 107 and 108 in the receiving part 100R. Transmitting Part 100T (Fig. 3)

Of the input GbE signals 1 and 2 of two channels, the GbE signal 2 read out of the FIFO memory 106 is logic-inverted in the logic inverting circuit 201 and provided to the multiplexing circuit 109 wherein it is multiplexed with the other non-logic-inverted GbE signal 1. The other operations are the same as in the case of Fig. 1, and hence no description will be repeated.

### Receiving Part 100R (Fig. 4)

On the other hand, in the receiving part 100R of Fig. 4 the multiplexed GbE signal decoded in the OTU frame terminating circuit 112 is demultiplexed by the demultiplexing circuit 110 into the GbE signals 1 and 2 of two channels, which are subjected to logical decision in the channel selecting circuit 202, the logic-inverted signal is re-inverted in logic, that is, the channels of the signals are identified depending on whether they are logic-inverted or not, and the signals are written in the FIFO memories 107 and 108 of the corresponding channels, respectively.

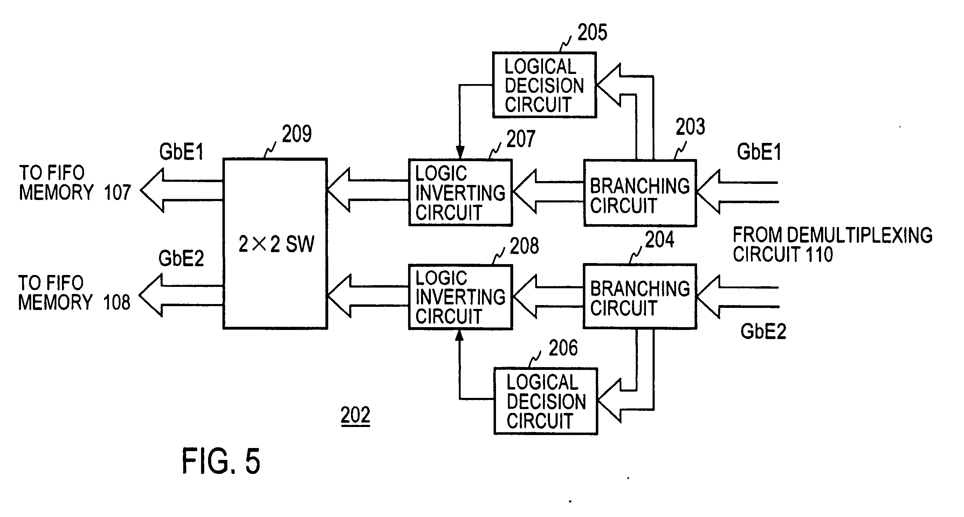

An embodiment of the channel selecting circuit 202 is shown in Fig. 5.

The input GbE signals 1 and 2 of two channels are branched by branching circuits 203 and 204 into two, respectively, which are subjected to pattern collation in logical decision circuits 205 and 206. The pattern collation is performed using two octets (20 bits) composed of a special character K28.5 and a data code 0x50 of the GbE signal. As IDLE codes for use in the inter-frame gap between MAC frames there are two kinds of IDLE codes, that is, IDLE 1 and IDLE2; according to the IEEE 802.3z standard, in the case where an RD (running disparity) value immediately following a second special code (i.e., Packet_Extension /R/) of first and second special codes (an octet of each of End_of Packet and Packet_Extension indicated by /T/R/ or two octets of Packet_Extension indicated by /R/R/) of an inter-frame gap IFG is positive as shown in Fig. 12B, the third code of the inter-frame gap is IDLE1 and the fourth and subsequent codes are IDLE2. When the RD value immediately after the second special code /R/ of the inter-frame gap is negative, the third code of the inter-frame gap is IDLE2 and the fourth and subsequent codes are also IDLE2. Consequently, IDLE2 is always present regardless of the RD value immediately after the second special code /R/. The RD value is defined such that RD = + or RD = - or equal to the RD value of the immediately preceding 10-bit word, depending on whether the number of "1s" in the immediately preceding 10-bit word is larger or smaller than or equal to the number of "0s". The IDLE 2 code is a concatenation of a 10-bit code "0011111010" referred to as the special character K28.5 and the 10-bit code 0x50. It is defined that the first seven bits "0011111" in the bit sequence of the special character K28.5 would not occur in bit sequences by any code trains, and the character K28.5 is called a "comma character" since it is used as a delimiter in the bit sequence.

In this embodiment the bit train of the constituent code K28.5 and 0x50 of the code IDLE2 or its logic-inverted code is pattern-collated to detect the code IDLE2, and it is decided whether the GbE signal is logic-inverted, depending on whether the code IDLE2 is logic-inverted.

The signal of the channel found by the pattern collation to be logic-inverted is logic-inverted by a logic inverting circuit 207 or 208 of the corresponding channel and output therefrom. The logic inverting circuits 207 and 208 are each formed by an EXOR, for instance. The GbE signals of two channels are switched by a 2x2 SW 209 so that the logic-inverted signal is input to the FIFO memory 108. With such an arrangement as described above, it is possible to establish accurate connections between two channels when two multiplexing repeater of this embodiment are interconnected.

As described above, according to the second embodiment, the transmitting part multiplexes the two GbE signals 1 and 2 after logic-inverting one of them, and the receiving part detects patterns of special codes in the demultiplexed GbE signals of two channels and decides whether the GbE signal is inverted or not, depending on whether the detected pattern is logic-inverted.

### THIRD EMBODIMENT

In each of the embodiments described above, in the case of mapping the GbE signals of two channels over the OTU1 signal, when the frequencies of the clocks CLK1 and CLK1' generated from the received GbE signals are higher than 1/2 of the frequency f2 of the OTU1 signal clock CLK6, the data read rate of the FIFO memories 105 and 106 is lower than the write thereof, so that even after the FIFO memories are fully written, the GbE signals are still written in the FIFO memories; consequently, the signals held in the memories are not read out therefrom but instead they overflow the memories and are discarded in the order in chronological order.

On the other hand, when the clock frequencies generated from the received GbE signals are lower than 1/2 of the frequency f2 of the OTU1 signal clock CLK6, since the data read rate of the FIFO memories 105 and 106 is higher than the write rate, data always becomes exhausted in the memories, during which no data is provided which is to be mapped over the payload of the OTU frame. A description will be given of an embodiment adapted to deal with the excess of shortage of data when the bit rate of the multiplexed signal does not coincide with the bit rate of the OTU payload as mentioned above.

Incidentally, the GbE signal is set as an 8B10B converted code below PMA (Physical Media Attachment) as shown in Fig. 12B. This 10-bit conversion unit will hereinafter be referred to as a word, but since it corresponding to 8-bit word before conversion, the 10 bits are counted as one octet.

The word of the GbE signal contains data and special codes. According to the IEEE 802.3 specification, the GbE signal is transmitted as a MAC (Media Access Control) frame. The MAC frame is composed of data codes, special characters indicating the beginning and end of data and an overhead, and adjacent MAC frames are separated by a signal for synchronization, that is, by an inter-frame gap IFG. The inter-frame gap below PMD (Physical Media Dependent) is specified to be equal to or longer than 0.096 µs, and it is defined that the inter-frame gap be filled with 20 bits (i.e., two octets) of Carrier_Extension /R/R/, or 10 bits (i.e., one octet) of End_of_Packet and 10 bits of Carrier_Extension /T/R/, 20 bits of one IDLE1 or 2 code and four or more IDLE2 codes.

In view of the above, this embodiment adjusts or regulates an excess or shortage of data resulting from noncoincidence between the bit rates by deletion or insertion of the IDLE2 code.

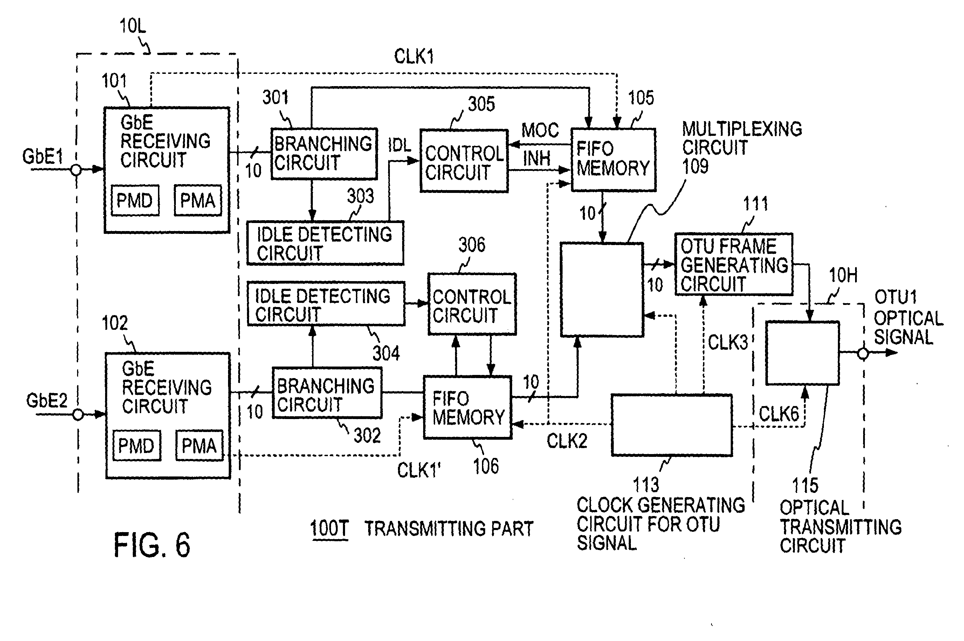

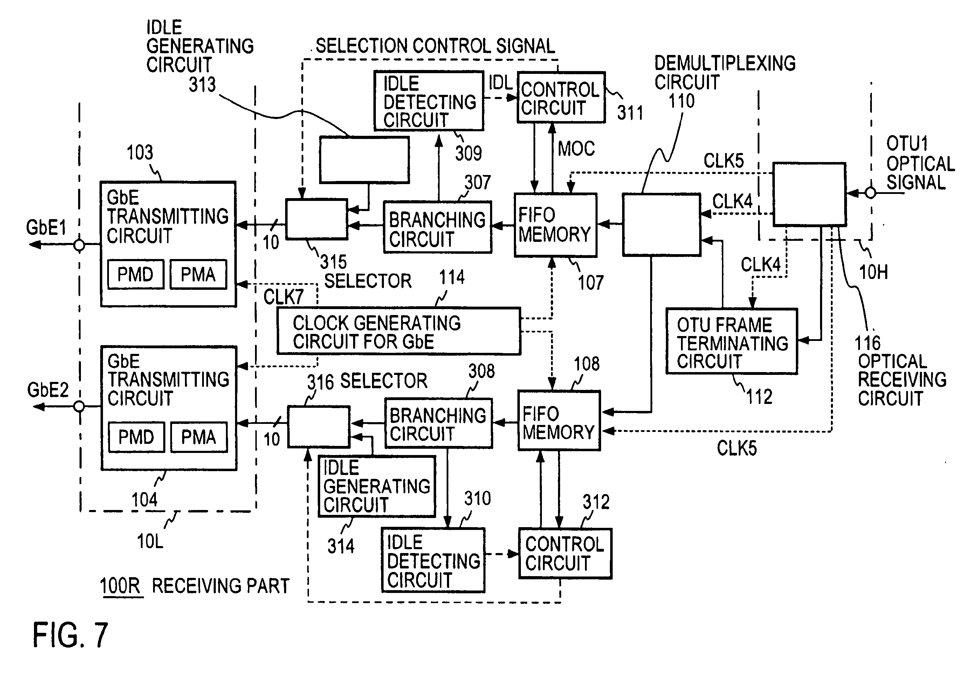

Figs. 6 and 7 illustrate the transmitting part 100T and the receiving part 100R in the third embodiment of the multiplexing repeater according to the present invention.

The transmitting part 100T (Fig. 6) of this embodiment has a configuration in which branching circuits 301 and 302 for branching the received GbE signals into two, respectively, IDLE signal detecting circuits 303 and 304 for detecting the IDLE2 signals from the GbE signals, and control circuits 305 and 306 for controlling the stop and start of writing to the FIFO memories 105 and 106 are added to the transmitting part 100T of the first embodiment shown in Fig. 1. The receiving part 100R of this embodiment, shown in Fig. 7, has a configuration in which branching circuits 307 and 308 for branching the read outputs from the FIFO memories 107 and 108 into two, respectively, IDLE code detecting circuits 309 and 310 for detecting IDLE signals from the read outputs, IDLE code generating circuits 313 and 314 for generating IDLE2 signals, selectors 315 and 316 each for selecting and outputting one of two input signals, and control circuits 311 and 312 for switching the selecting operation of the selectors 315 and 316. Transmitting Part 100T (Fig. 6)

The input GbE signal 1 is converted by the GbE receiving circuit 101 to an NRZ (Non Return to Zero) code of 10 parallel bits. This signal is branched by the branching circuit 301 into two, one of which is written in the FIFO memory 105 and the other of which is input to the IDLE code detecting circuit 303. The IDLE code detecting circuit 303 outputs an IDLE code detection signal IDL when the input signal is the IDLE2 signal. The IDLE code detection signal IDL is input to the control circuit 305. When the double of the bits rate of the GbE signal is higher than the bit rate of the payload of the OTU1 signal, yet-to-be-read data is accumulated in the FIFO memories 105 and 106 since the bit rate of the data being written in the FIFO memories 105 and 106 is higher than the bit rate of the data being read out therefrom and erased. The control circuit 305 obtains memory occupancy rate information from the FIFO memory 105, and when the memory occupancy rate is above a preset upper limit value and it is found from the IDLE code detection signal IDL that the signal to be written in the FIFO memory 105 is IDLE2, the control circuit sends a write stop control signal to the FIFO memory 105 to stop it from writing therein signals. Accordingly, IDLE2 codes of the inter-frame gaps of the received GbE signals 1 and 2 are discarded while the FIFO memory stops writing. When it is found in the IDLE code detecting circuit 303 that the signal to be written in the FIFO memory 105 next is other signal than the IDLE2 signal, or when the occupancy rate of the FIFO memory 105 goes down below a predetermined lower limit value, the control circuit 305 controls the FIFO memory 105 to start writing immediately. The GbE signal 2 is also processed in the same manner as in the case of the GbE signal 1. Receiving Part 100R (Fig. 7)

The OTU1 optical signal is received by the optical receiving circuit 116, and the multiplexed GbE signal regenerated by the OTU frame terminating circuit 112 is demultiplexed by the demultiplexing circuit 110 into GbE signals of two channels, which are written in the FIFO memories 107 and 108. The GbE signal read out of the FIFO memory 107 is branched by the branching circuit 307 into two, one of which is input to the selector 315 and the other of which is input to the IDLE code detecting circuit 309. The IDLE code detecting circuit 309 outputs the IDLE code detection signal IDL when the input signal is the IDLE2 signal. The IDLE code detection signal IDL is input to the control circuit 311.

When the double of the bit rate of the GbE signal is higher than the bit rate of the payload of the OTU1 signal, the data read rate of the FIFO memories 107 and 108 exceeds their write rate, providing a period of data exhaustion in the FIFO memories 107 and 108. To avoid this, the control circuit 311 obtains memory occupancy rate information MOC from the FIFO memory 107, and when the memory occupancy rate is lower than a preset lower limit value and it is found from the IDLE code detection signal that the signal read out of the FIFO memory 107 is IDLE2, the control circuit sends a readout stop control signal to the FIFO memory 107 to stop it from signal readout.

Further, the control circuit 311 sends a CH selection control signal to the selector 315 to control it to switch its input selection from the output signal from the branching circuit 307 to the IDLE2 signal generated by the IDLE code generating circuit 313. As the reception continues in this state, the occupancy rate of the FIFO memory 107 increases, and upon detecting from the memory occupancy rate information MOC that the utilization factor exceeds a preset upper limit value, the control circuit 311 controls the FIFO memory 107 to start readout therefrom and switches the selector 315 to select the output from the branching circuit 307. The same goes for the signal written in the FIFO memory 108.

With the method described above, even when the transmission rate of the GbE signal is higher than 1/2 of the OTU1 payload rate, it is possible to adjust the transmission rate with no dropout of payload data by discarding the IDLE2 in the inter-frame gap in the transmitting part 100T and inserting the IDLE2 in the inter-frame gap in the receiving part 100R. When the occupancy rate of the MAC frame on the GbE signal is high, that is, when the inter-frame gap is short and the rate of the IDLE 2 signal to the GbE is low, there is a danger of he MAC frame being discarded, but this does not present any serious problem in practice since in an ordinary state of use the rate of the MAC frame being transmitted via the GbE is tens of percent relative to the GbE signal.

In order to accommodate the difference between the read and write rates of the FIFO memories, when free spaces in the FIFO memories 105 and 106 become small (that is, become a preset value), the transmitting part 100T detects the IDLE2 signal from the GbE signal and inhibits a write of IDLE2 signal in each of the FIFO memories 105 and 106; on the contrary, in the receiving part 100R, since decoding of the GbE signal becomes deficient in data words, there is provided means by which the IDLE 2 codes are input to the GbE transmitting circuits 103, 104 from the IDLE code generating circuits 313, 314 according to the stored capacities of the FIFO memories-this makes it possible to cope with an excess or shortage of data even when the bit rate of the multiplexed GbE signal does not coincide with the bit rate of the OTU payload.

### FOURTH EMBODIMENT

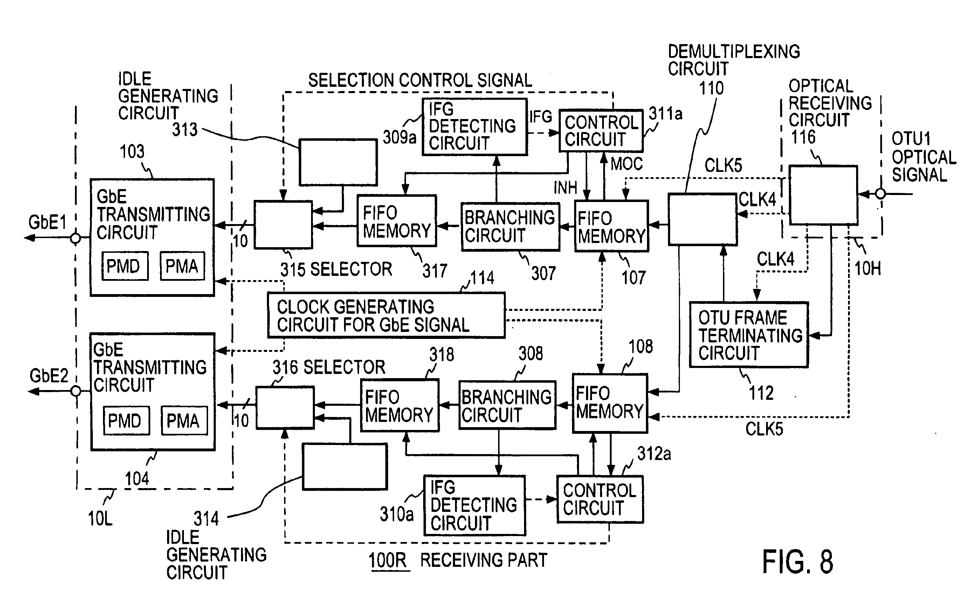

Fig. 8 illustrates a modified form of the receiving part 100R of Fig. 7 in the third embodiment described above. The illustrated configuration differs from the Fig. 7 embodiment in using IFG detecting circuits 309a and 310a in place of the IDLE code detecting circuits 309 and 310, control circuits 311a and 312a in place of the control circuits 311 and 312, and a FIFO memory 317 between the branching circuits 307 and the selector 315 and a FIFO memory 318 between the branching circuit 308 and the selector 316.

The IFG detecting circuits 309a perform the pattern collation of the GbE signal input thereto from the branching circuit 307, and upon detecting the End_of_Packet code /T/ and the Carrier_Extension code /R/ or two Carrier_Extension codes /R/R/ added to the end of the MAC frame, the IFG detecting circuit decides that the inter-frame gap is to start, then sets an inter-frame gap detection signal IFG to "1" and provides it to the control circuit 311 a, and at the same time starts counting the length of the inter-frame gap and provides the count value to the control circuit 311a. The count is made, for example, in 20-bit word units and reset to zero after proceeding to a maximum of 6. On the other hand, the detection signal IFG is set to "0" upon the start of the next frame being detected. Accordingly, when the occupancy rate MOC of the FIFO memory 107 becomes lower than a predetermined value during the "1" period of the detection signal IFG, the control circuit 311a read-inhibits the FIFO memories 107 and 317 and also write-inhibits the FIFO memory 317, and controls the selector 315 to select and output the IDLE2 code fed from the IDLE code generating circuit 313. When the occupancy rate exceeds the predetermined value, the control circuit write-enables the FIFO memories and switches the selector 315 to the output side of the FIFO memory 107.

In the case where the count value, provided when the succession of IDLE2 codes changes to a different code, that is, when the IFG signal goes to "0," is smaller than 6 (i.e., 12 octets), that is, the inter-frame gap is smaller than 12 octets (120 bits), the control circuit 311a read-inhibits the FIFO memory 317 and controls the selector 315 to insert the code IDLE2 fed from the IDLE code generating circuit 313 in the GbE signal. All the while GbE signals are accumulated in the FIFO memory 317. The IFG detecting circuit 309a keeps on counting the number of readout codes of the FIFO memory 107 and resets the count to zero when the count value reaches 6. Upon resetting of the count value, the control circuit 311 a resumes readout of the FIFO memory 317 and switches the input of the selector 315 to the FIFO memory 317 side. The part on the side of the FIFO memories 108 and 318 operates in the same manner as described above.

The IEEE802.3z Recommendation specifies that the inter-frame gap need to be equal to or longer than 12 octets, but in the Fig. 7 embodiment, since the minimum value (120 bits) of the inter-frame gap length is not always assured to obtain, signal conduction may sometimes be impossible according to the specifications of GbE equipment to which the multiplexing repeater is connected. With the Fig. 8 configuration, the inter-frame gap length can be held equal to or larger than a predetermined minimum value.

Thus the Fig. 8 embodiment is free from the problem that arises from its connection to other equipment via the GbE interface.

### FIFTH EMBODIMENT

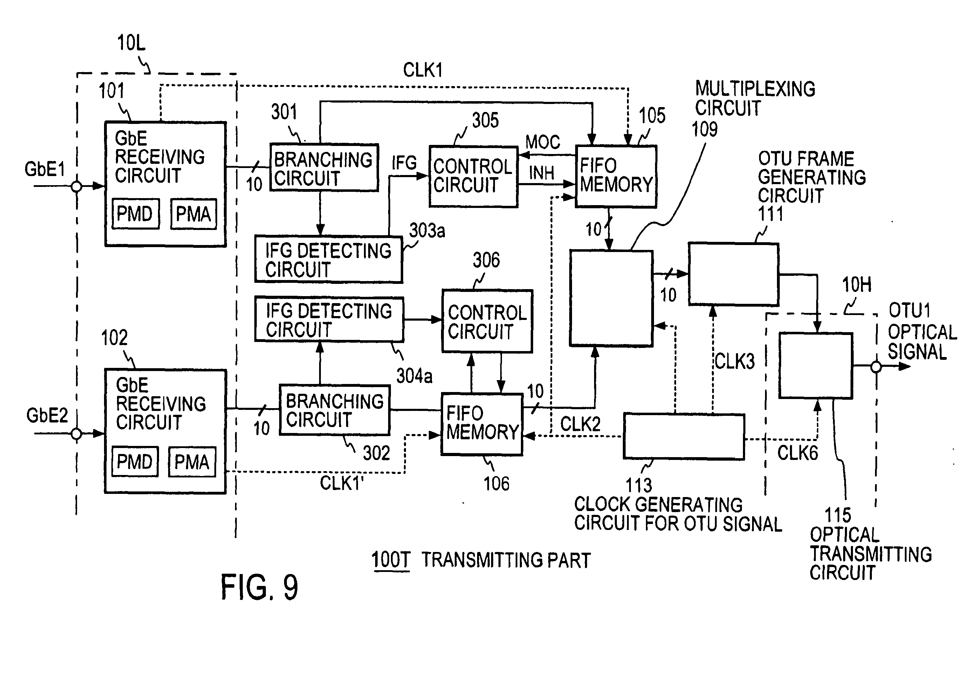

Fig. 9 illustrates a modification of the transmitting part 100T of Fig. 6 in the multiplexing repeater of the third embodiment. In the Fig. 8 embodiment the receiving part 100R has been described to insert the code IDLE2 in the GbE signal when the inter-frame gap of the GbE signal of each channel demultiplexed from the OTU 1 signal becomes smaller than 120 bits (12 octets); in contrast thereto, however, in the Fig. 9 embodiment when the inter-frame gap of the received GbE signal in the transmitting part 100T exceeds 120 bits and the occupancy rate of the FIFO memory exceeds a predetermined value, the write of IDLE2 in the FIFO memory is inhibited.

This embodiment differs from the third embodiment of Fig. 6 in the use of the inter-frame gap detecting circuits 303a and 304a in place of the IDLE code detecting circuits 303 and 304.

The IFG detecting circuits 303a and 304a each contain a counter, which starts counting the number of codes IDLE2 at the beginning of the inter-frame gap and is reset to zero upon detecting a code different from IDLE2. When the count value reaches 6 (that is, 20 octets x 6 = 120 bits), the IFG detecting circuit stops counting and, at the same time, sets the IFG detection signal to "1" and outputs it. In the case where the occupancy rate MOC of the FIFO memory 105 exceeds a predetermined value when the IFG detection signal IFG is in the "1" state, the control circuit 305 supplies the FIFO memory 105 with a control signal INH inhibiting a write in the FIFO memory 105 to inhibit the write therein of IDLE2. Upon termination of the inter-frame gap, since the code at the beginning of the next frame is not the IDLE2 code, the IFG detecting circuit 303a resets the counter to zero and sets the IFG detection signal IFG to "0." As a result, the write-inhibit of the FIFO memory 105 is cancelled.

The IFG detecting circuit 304a also operates similarly. With the above-described function of the IDLE code detecting circuit, it is possible to make the inter-frame gap longer than the specified 12 octets, enabling accommodation of the difference in bit rate between the GbE signal and the payload of the OTU signal without getting out of the GbE specification.

### SIXTH EMBODIMENT

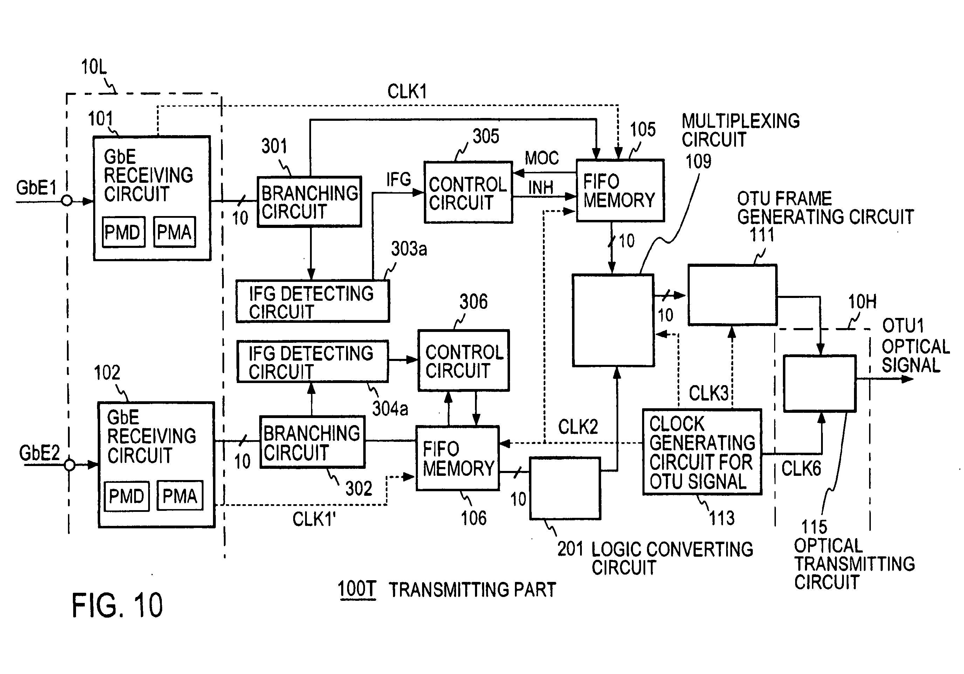

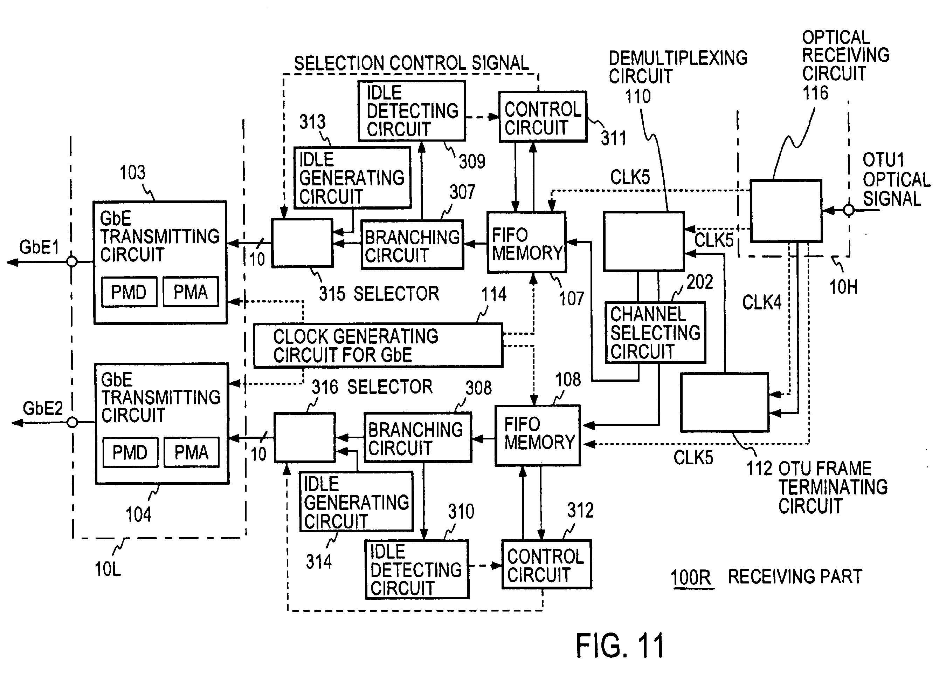

Figs. 10 and 11 illustrate the transmitting part 100T and the receiving part 100R of a sixth embodiment of the multiplexing repeater according to the present invention, respectively.

The transmitting part 100T of Fig. 10 is one that the logic inverting circuit in the Fig. 3 embodiment is added to the Fig. 9 embodiment, and the receiving part 100R of Fig. 11 is one that the channel selecting circuit 202 (Fig. 5) in the Fig. 4 embodiment is added to the Fig. 7 embodiment.

The logical decision in the logical decision circuits 205 and 206 described previously with reference to Fig. 5 is made by the pattern collation of IDLE2, and hence the logical decision cannot be made when the IDLE2 signal is absent, but since the functions of the IFG detecting circuits 303a and 304a in the transmitting part 100T of Fig. 10 assure that the signal to be input to the channel selecting circuit 202 in the receiving part 100R of Fig. 11 has the code IDLE2, the above logical decision can be made.

### EFFECT OF THE INVENTION

As described above, by use of the optical multiplexing repeater of the present invention which permits multiplexing GbE signals of two channels and mapping of the multiplexed signal over the payload of the OTU signal, it is possible to establish connections between LANs via a manageable but low-cost network.

## Claims

1. A multiplexing repeater which has a transmitting part (100T) and a receiving part (100R) each provided with a high-speed optical interface (10H) and a low-speed interface (10L) for transmitting and receiving frame-structured transmission signals, respectively, said transmitting part (100T) comprising:
first and second low-speed transmission signal receiving circuits (101, 102) provided on said low-speed interface (10L), for receiving first and second low-speed transmission signals;
first and second FIFO memories (105, 106) in which said first and second low-speed transmission signals received by said first and second low-speed transmission signal receiving circuits are written by first and second clocks (CLK1, CLK1'), respectively, and from which the stored signals are read out by a common third clock (CLK2) independent of said first and second clocks;
a multiplexing circuit (109) for multiplexing said first and second low-speed transmission signals read out by said third clock from said first and second FIFO memories (105, 106) and for outputting the multiplexed signal; and
high-speed optical transmission signal frame generating means (111) for mapping said multiplexed signal over the payload of the frame of a first high-speed optical transmission signal and for outputting it to said high-speed optical interface (10H);
wherein said receiving part (100R) comprises:
high-speed optical transmission signal frame terminating/demultiplexing means (110, 112) for decoding and demultiplexing the frame-structured high-speed optical transmission signal received on said high-speed optical interface (10H) into third and fourth low-speed transmission signals and for outputting them;
third and fourth FIFO memories (107, 108) in which said third and fourth
low-speed transmission signals demultiplexed by said high-speed optical transmission signal frame terminating/demultiplexing means (110, 112) are written by fourth and fifth clocks (CLK5), respectively, and from which the stored signals are read out by a sixth clock (CLK7) independent of said fourth and fifth clocks; and
first and second low-speed transmission signal transmitting circuits (103, 104) provided on said low-speed interface (10L), for transmitting said third and fourth low-speed transmission signals read out of said third and fourth FIFO memories (107, 108);
**characterized in that**
said transmitting part (100T) includes:
first and second code detecting means (303, 304) for detecting predetermined special codes (IDLE) in said first and second low-speed transmission signals input via said low-speed interface (10L) and for outputting special code detection signals; and
first and second control means (305, 306) for temporarily inhibiting writes of said special codes in said first and second FIFO memories (105, 106) in accordance with said special code detection signals and the occupancy rates of said first and second FIFO memories (105, 106); and
said receiving part (100R) includes:
first and second code generating means (313, 314) for generating special codes (IDLE);
first and second selectors (315, 316) for selectively providing outputs from said third and fourth FIFO memories (107, 108) and special codes from said first and second code generating means (313, 314) to said low-speed interface (10L);
third and fourth code detecting means (309, 310) for detecting special codes in said third and fourth low-speed transmission signals read out of said third and fourth FIFO memories (107, 108) and for outputting detection signals; and
third and fourth control means (311, 312) for temporarily inhibiting readout of said third and fourth FIFO memories (107, 108) in accordance with the code detection by said third and fourth code detecting means (309, 310) and the occupancy rates of said third and fourth FIFO memories and for inserting said special codes generated by said first and second code generating means (313, 314) in said third and fourth low-speed transmission signals.

2. The multiplexing repeater of claim 1, wherein said first and second control means (305, 306) are means for detecting that the occupancy rates (MOC) of said first and second FIFO memories (105, 106) respectively corresponding thereto exceed a first predetermined value and for responding to the outputting of said special code detection signals (IDL) by said first and second code detecting means (303, 304) to inhibit said special codes in said first and second low-speed transmission signals from being written in said first and second FIFO memories (105, 106).

3. The multiplexing repeater of claim 1, wherein said third and fourth control means (311, 312) are means for detecting that the occupancy rates (MOC) of said third and fourth FIFO memories (107, 108) respectively corresponding thereto are lower than a second predetermined value and for responding to the outputting of said special code detection signals (IDL) by said third and fourth code detecting means (309, 310) to inhibit readout of said third and fourth FIFO memories (107, 108) and controls said first and second selectors (315, 316) to insert special codes from said first and second code generating means (313, 314) into said third and fourth low-speed transmission signals.

4. The multiplexing repeater of claim 1, wherein said receiving part (100R) includes:
first and second code generating means (313, 314) for generating special codes;
first and second selectors (315, 316) for selectively providing the outputs from said third and fourth FIFO memories (107, 108) and the special codes from said first and second code generators (313, 314) to said low-speed interface;
first and second inter-frame gap detecting means (309a, 310a) for detecting inter-frame gaps in said third and fourth low-speed transmission signals read out of said third and fourth FIFO memories and for outputting detection signals; and
third and fourth control means (311a, 312a) for temporarily inhibiting readout of said third and fourth FIFO memories (107, 108) in accordance with the detected outputs from said first and second inter-frame gap detecting means (309a, 310a) and the occupancy rates of said third and forth FIFO memories (107, 108) and for controlling said first and second selectors (315, 316) to insert said special codes generated by said first and second code generating means into said third and fourth low-speed transmission signals.

5. The multiplexing repeater of claim 4, wherein: said receiving part (100R) includes fifth and sixth FIFO memories (317, 318) in which signals read out of said third and fourth FIFO memories (107, 108) are written and from which the signals written therein are read out and output to said first and second selectors (315, 316); said first and second inter-frame gap detecting means (309a, 310a) are adapted to count codes during the inter-frame gaps of said third and fourth low-speed transmission signals read out of said third and fourth FIFO memories (107, 108); and when the count values are smaller than predetermined values, said third and fourth control means (311 a, 312a) inhibit readout of said fifth and sixth FIFO memories (317, 318) and control said first and second selectors (315, 316) to insert said special codes generated by said first and second code generating means (313, 314) into said third and fourth low-speed transmission signals.

6. The multiplexing repeater of claim 1, wherein said first and second code detecting means (303, 304) are adapted to count successions of predetermined special codes in said first and second low-speed transmission signals and output said detection signals when the count values reach predetermined values.

7. The multiplexing repeater of any one of claims 1 to 6, wherein:
said transmitting part (100T) includes first logic inverting means (201) provided between the output of one of said first and second FIFO memories (105, 106), for inverting the logic of one of said first and second low-speed transmission signals read out from said one of said first and second FIFO memories and for providing the logic-inverted output to said multiplexing circuit (109); and
said receiving part (100R) includes:
logical decision means (205, 206) for deciding the logic of predetermined special codes in said third and fourth low-speed transmission signals decoded, by said high-speed transmission signal frame terminating/demultiplexing means (110, 112), from the optical transmission signal received by said high-speed optical interface;
second logic inverting means (207, 208) responsive to the decision result by said logical decision means (205, 206) to re-invert the logic of that one of said third and fourth low-speed transmission signals which have been found logic-inverted; and
switching means (209) for outputting each of said third and fourth low-speed transmission signals to one of said third and fourth FIFO memories (107, 108), depending on whether said third and fourth low-speed transmission signals are logic-inverted.

8. The multiplexing repeater of any one of claims 1 to 6, wherein:
said first and second high-speed optical transmission signals are optical transmission signals each having an Optical_Transport_Network_1, hereinafter referred to as OTU1, frame structure defined by ITU-T G. 709, and said low-speed transmission signals are each a transmission signal having a Gigabit Ethernet, thereinafter referred to as GbE, frame structure defined by IEEE 802.3z;
said high-speed optical signal frame generating means (111) is OTU frame generating means for mapping a multiplexed version of said first and second GbE signals over an OTU1 payload of said OTU1 frame and for outputting the mapped output to said high-speed optical interface;
said high-speed optical transmission signal frame terminating/demultiplexing means (110, 112) is OTU1 frame terminating/demultiplexing means for decoding and demultiplexing third and fourth GbE signals from the transmission signal of said OTU1 frame structure received on said high-speed optical interface; and
said second and third low-speed transmission signal transmitting circuits (103, 104) are each a GbE transmitting circuit which is supplied with a signal read out from one of said third and fourth FIFO memories (107, 108) and outputs the input signal to said low-speed interface.

## Patentansprüche

1. Multiplexierender Repeater mit einem Sendeteil (100T) und einem Empfangsteil (100R), die jeweils mit einer schnellen optischen Schnittstelle (10H) und einer langsamen Schnittstelle (10L) zum Senden und Empfangen von rahmenstrukturierten Sendesignalen ausgestattet sind, wobei der Sendeteil (100T) umfasst:
erste und zweite langsame Sendesignalempfangsschaltungen (101, 102), die an der langsamen Schnittstelle (10L) vorgesehen sind, um erste und zweite langsame Sendesignale zu empfangen;
erste und zweite FIFO-Speicher (105, 106), in denen die von der ersten und zweiten langsamen Sendesignalempfangsschaltung empfangenen ersten und zweiten langsamen Sendesignale durch einen ersten bzw. zweiten Takt (CLK1, CLK1') geschrieben werden und aus denen die gespeicherten Signale durch einen gemeinsamen, von dem ersten und zweiten Takt unabhängigen dritten Takt (CLK2) gelesen werden;
eine Multiplexierschaltung (109) zum Multiplexieren der durch den dritten Takt aus dem ersten und zweiten FIFO-Speicher (105, 106) gelesenen ersten und zweiten langsamen Sendesignale und zum Ausgeben des multiplexierten Signals; und
schnelle optische Sendesignalrahmenerzeugungsmittel (111) zum Abbilden des multiplexierten Signals auf die Nutzlast des Rahmens eines ersten schnellen optischen Sendesignals und zum Ausgeben desselben an die schnelle optische Schnittstelle (10H);
wobei der Empfangsteil (100R) umfasst:
schnelle optische Sendesignalrahmenterminier-/Demultiplexiermittel (110, 112) zum Decodieren und Demultiplexieren des auf der schnellen optischen Schnittstelle (10H) empfangenen rahmenstrukturierten schnellen optischen Sendesignals in dritte und vierte langsame Sendesignale und zum Ausgeben derselben;
dritte und vierte FIFO-Speicher (107, 108) in die die durch die schnellen optischen Sendesignalrahmenterminier-/Demultiplexiermittel (110, 112) demultiplexierten Sendesignale durch einen vierten bzw. fünften Takt (CLK5) geschrieben werden und aus denen die gespeicherten Signale durch einen von dem vierten und fünften Takt unabhängigen sechsten Takt (CLK7) gelesen werden; und
erste und zweite langsame Sendesignalsendeschaltungen (103, 104), die an der langsamen Schnittstelle (10L) vorgesehen sind, um das aus dem dritten bzw. vierten FIFO-Speicher (107, 108) gelesene dritte und vierte langsame Sendesignal zu senden;
**dadurch gekennzeichnet, dass**
der Sendeteil (100T) umfasst:
erste und zweite Codeerfassungsmittel (303, 304) zum Erfassen vorgegebener spezieller Codes (IDLE) in dem über die langsame Schnittstelle (10L) eingegebenen ersten und zweiten langsamen Sendesignal und zum Ausgeben spezieller Codeerfassungssignale; und
erste und zweite Steuermittel (305, 306) zum zeitweiligen Sperren des Schreibens der speziellen Codes in den ersten und zweiten FIFO-Speicher (105, 106) entsprechend den speziellen Codeerfassungssignalen und den Belegungsraten des ersten und zweiten FIFO-Speichers (105, 106); und
der Empfangsteil (100R) umfasst:
erste und zweite Codeerzeugungsmittel (313, 314) zum Erzeugen von speziellen Codes (IDLE);
erste und zweite Selektoren (315, 316) zum selektiven Bereitstellen von Ausgaben aus dem dritten und vierten FIFO-Speicher (107, 108) und von speziellen Codes aus dem ersten und zweiten Codeerzeugungsmittel (313, 314) an die langsame Schnittstelle (10L);
dritte und vierte Codeerfassungsmittel (309, 310) zum Erfassen von speziellen Codes in den aus dem dritten und vierten FIFO-Speicher (107, 108) gelesenen dritten und vierten langsamen Sendesignal und zum Ausgeben von Erfassungssignalen; und
dritte und vierte Steuermittel (311, 312) zum zeitweiligen Sperren des Auslesens des dritten und vierten FIFO-Speichers (107, 108) gemäß der Codeerfassung durch das dritte und vierte Codeerfassungsmittel (309, 310) und den Belegungsraten des dritten und vierten FIFO-Speichers und zum Einfügen der durch das erste und zweite Codeerzeugungsmittel (313, 314) erzeugten speziellen Codes in das dritte und vierte langsame Sendesignal.

2. Multiplexierender Repeater nach Anspruch 1, bei dem das erste und zweite Steuermittel (305, 306) Mittel sind zum Erfassen, dass die Belegungsraten (MOC) des ihnen jeweils entsprechenden ersten und zweiten FIFO-Speichers (105, 106) einen ersten vorgegebenen Wert überschreiten und zum Reagieren auf die Ausgabe der speziellen Codeerfassungssignale (IDL) durch die ersten und zweiten Codeerfassungsmittel (303, 304), damit, dass sie sie die speziellen Codes in dem ersten und zweiten langsamen Sendesignal daran hindern, in den ersten und zweiten FIFO-Speicher (105, 106) geschrieben zu werden.

3. Multiplexierender Repeater nach Anspruch 1, bei dem das dritte und vierte Steuermittel Mittel sind zum Erfassen, dass die Belegungsraten (MOC) des ihnen jeweils entsprechenden dritten und vierten FIFO-Speichers (107, 108) niedriger als ein zweiter vorgegebener Wert sind und zum Reagieren auf die Ausgabe der speziellen Codeerfassungssignale (IDL) durch das dritte und vierte Codeerfassungsmittel (309, 310), damit, dass sie das Lesen der dritten und vierten FIFO-Speicher (107, 108) sperren und die ersten und zweiten Selektoren (315, 316) steuern, um spezielle Codes aus dem ersten und zweiten Codeerzeugungsmittel (313, 314) in das dritte und vierte langsame Sendesignal einzufügen.

4. Multiplexierender Repeater nach Anspruch 1, bei dem der Empfangsteil (100R) umfasst:
erste und zweite Codeerzeugungsmittel (313, 314) zum Erzeugen von speziellen Codes;
erste und zweite Selektoren (315, 316) zum selektiven Bereitstellen der Ausgaben aus dem dritten und vierten FIFO-Speicher (107, 108) und der speziellen Codes aus dem ersten und zweiten Codegenerator (313, 314) an die langsame Schnittstelle;
erste und zweite Zwischenrahmenlückenerfassungsmittel (309a, 310a) zum Erfassen von Zwischenrahmenlücken in den aus dem dritten und vierten FIFO-Speicher gelesenen dritten und vierten langsamen Sendesignalen und zum Ausgeben von Erfassungssignalen; und
dritte und vierte Steuermittel (311a, 312a) zum zeitweiligen Sperren des Auslesens aus dem dritten und vierten FIFO-Speicher (107, 108) entsprechend den erfassten Ausgaben aus dem ersten und zweiten Zwischenrahmenerfassungsmittel (309a, 310a) und den Belegungsraten des dritten und vierten FIFO-Speichers (107, 108) und zum Steuern des ersten und zweiten Selektors (315, 316), um die von dem ersten und zweiten Codeerzeugungsmittel erzeugten speziellen Codes in das dritte und vierte langsame Sendesignal einzufügen.

5. Multiplexierender Repeater nach Anspruch 4, bei dem: der Empfangsteil (100R) fünfte und sechste FIFO-Speicher (317, 318) umfasst, in die aus dem dritten und vierten FIFO-Speicher (107, 108) gelesene Signale geschrieben werden und aus denen die da hinein geschriebenen Signale ausgelesen und an den ersten und zweiten Selektor (315, 316) ausgegeben werden; wobei das erste und zweite Zwischenrahmenlückenerfassungsmittel (309a, 310a) eingerichtet sind, während der Zwischenrahmenlücken des aus dem dritten und vierten FIFO-Speicher (107, 108) ausgelesenen dritten und vierten langsamen Sendesignals Codes zu zählen, und wenn die Zählwerte kleiner als vorgegebene Werte sind, das dritte und vierte Steuermittel (311a, 312a) das Auslesen der fünften und sechsten FIFO-Speicher (317, 318) unterbinden und den ersten und zweiten Selektor (315, 316) steuern, um die von dem ersten und zweiten Codeerzeugungsmittel (313, 314) erzeugten speziellen Codes in das dritte und vierte langsame Sendesignal einzufügen.

6. Multiplexierender Repeater nach Anspruch 1, bei dem das erste und zweite Codeerfassungsmittel (303, 304) eingerichtet sind, Folgen von vorgegebenen speziellen Codes in dem ersten und zweiten langsamen Sendesignal zu zählen und die Erfassungssignale auszugeben, wenn die Zählwerte vorgegebene Werte erreichen.

7. Multiplexierender Repeater nach einem der Ansprüche 1 bis 6, bei dem:
der Sendeteil (100T) erste Logik invertierende Mittel (201) umfasst, die zwischen dem Ausgang eines unter erstem und zweitem FIFO-Speicher (105, 106) vorgesehen sind, um die Logik eines der aus dem ersten und zweiten FIFO-Speicher gelesenen langsamen Sendesignale zu invertieren und die logisch invertierte Ausgabe an die Multiplexierschaltung (109) zu liefern; und
der Empfangsteil (100R) umfasst:
Logikentscheidungsmittel (205, 206) zum Entscheiden der Logik von vorgegebenen speziellen Codes in den dritten und vierten langsamen Sendesignalen, die durch das schnelle Sendesignalrahmenterminier-/Demultiplexiermittel (110, 112) aus dem von der schnellen optischen Schnittstelle empfangenen optischen Sendesignal decodiert werden;
zweite logische Invertierungsmittel (207, 208), die auf das Entscheidungsergebnis durch das logische Entscheidungsmittel (205, 206) durch Reinvertieren der Logik desjenigen unter drittem und viertem langsamen Sendesignal, das als logisch invertiert erkannt worden ist, reagieren; und
Schaltmittel (209) zum Ausgeben von jedes drittem und viertem langsamem Sendesignal an einen von drittem und viertem FIFO-Speicher (107, 108), je nachdem, ob das dritte und vierte langsame Sendesignal logisch invertiert sind.

8. Multiplexierender Repeater nach einem der Ansprüche 1 bis 6, bei dem:
das erste und zweite schnelle optische Sendesignal optische Sendesignale mit jeweils einer durch ITU-T G.709 definierten Optical_Transport_Network_1-(im Folgenden als OTU1 bezeichneten) Rahmenstruktur sind und die langsamen Sendesignale jeweils Sendesignale mit einer durch IEEE 802.3z definierten Gigabit-Ethernet-, im Folgenden als GbE bezeichneten, Rahmenstruktur sind;
das schnelle optische Signalrahmenerzeugungsmittel (111) ein OTU-Rahmenerzeugungsmittel zum Abbilden einer multiplexierten Version des ersten und zweiten GbE-Signals auf eine OTU1-Nutzlast des OTU1-Rahmens und zum Ausgeben der abgebildeten Ausgabe an die schnelle optische Schnittstelle ist;
das schnelle optische Sendesignalrahmenterminier-/Demultiplexiermittel (110, 112) ein OTU1-Rahmenterminier-/Demultiplexiermittel zum Decodieren und Demultiplexieren von dritten und vierten GbE-Signalen aus dem Sendesignal der auf der schnellen optischen Schnittstelle empfangenen OTU1-Rahmenstruktur ist; und
die zweite und dritte langsame Sendesignalsendeschaltung (103, 104) jeweils eine GbE-Sendeschaltung ist, die mit einem aus dem dritten oder vierten FIFO-Speicher (107, 108) gelesenen Signal versorgt ist und das eingegebene Signal an die langsame Schnittstelle ausgibt.

## Revendications

1. Répéteur multiplexeur qui possède une partie d'émission (100T) et une partie de réception (100R), chacune étant dotée d'une interface optique à grande vitesse (10H) et d'une interface à faible vitesse (10L), afin d'émettre et de recevoir des signaux d'émission organisés en trames, respectivement, ladite partie d'émission (100T) comprenant :
un premier et un deuxième circuit de réception de signal d'émission à faible vitesse (101, 102), implantés dans ladite interface à faible vitesse (10L), pour recevoir un premier et un deuxième signal d'émission à faible vitesse ;
une première et une deuxième mémoire FIFO (105, 106), dans lesquelles sont inscrits par un premier et un deuxième signal d'horloge (CLK1, CLK1') lesdits premier et deuxième signaux d'émission à faible vitesse reçus par lesdits premier et deuxième circuits de réception de signal d'émission à faible vitesse, respectivement, et d'où les signaux mémorisés sont lus par un troisième signal d'horloge (CLK2) commun, indépendant desdits premier et deuxième signaux d'horloge ;
un circuit de multiplexage (109), destiné à multiplexer lesdits premier et deuxième signaux d'émission à faible vitesse lus par ledit troisième signal d'horloge dans lesdites première et deuxième mémoires FIFO (105, 106) et à fournir en sortie le signal multiplexé ; et
un moyen de production de trames de signal optique d'émission à grande vitesse (111), destiné à placer ledit signal multiplexé dans la charge utile de la trame d'un premier signal optique d'émission à grande vitesse et à le fournir en sortie à ladite interface optique à grande vitesse (10H) ;
dans lequel ladite partie de réception (100R) comprend :
un moyen de terminaison/multiplexage de trames de signaux optiques d'émission à grande vitesse (110, 112), destiné à décoder et démultiplexer le signal optique d'émission à grande vitesse, organisé en trames, reçu sur ladite interface optique à grande vitesse (10H), pour produire des troisième et quatrième signaux d'émission à faible vitesse et à les fournir en sortie ;
une troisième et une quatrième mémoire FIFO (107, 108), dans lesquelles sont écrits par des quatrième et cinquième signaux d'horloge (CLK5) lesdits troisième et quatrième signaux d'émission à faible vitesse démultiplexés par ledit moyen de terminaison/multiplexage de trames de signaux optiques d'émission à grande vitesse (110, 112), respectivement, et dans lesquelles les signaux stockés sont lus par un sixième signal d'horloge (CLK7), indépendant desdits quatrième et cinquième signaux d'horloge ; et
un premier et un second circuit d'émission de signal d'émission à faible vitesse (103, 104), implantés dans ladite interface à faible vitesse (10L), destinés à émettre lesdits troisième et quatrième signaux d'émission à faible vitesse, lus dans lesdites troisième et quatrième mémoires FIFO (107, 108) ;
**caractérisé en ce que**
ladite partie d'émission (100T) comprend :
un premier et un second moyen de détection de code (303, 304), destinés à détecter des codes spéciaux prédéterminés (IDLE) dans lesdits premier et deuxième signaux d'émission à faible vitesse, entrés via ladite interface à faible vitesse (10L), et à fournir en sortie des signaux de détection de codes spéciaux ; et
un premier et un deuxième moyen de commande (305, 306), destinés à interdire temporairement des écritures desdits codes spéciaux dans lesdites première et deuxième mémoires FIFO (105, 106), en fonction desdits signaux de détection de codes spéciaux et des taux d'occupation desdites première et deuxième mémoires FIFO (105, 106) ; et
ladite partie de réception (100R) comprend :
un premier et un deuxième moyen de production de codes (313, 314), destinés à produire des codes spéciaux (IDLE) ;
un premier et un second sélecteur (315, 316), destinés à fournir sélectivement à ladite interface à faible vitesse (10L) des sorties provenant desdites troisième et quatrième mémoires FIFO (107, 108) et des codes spéciaux provenant desdits premier et deuxième moyens de production de codes (313, 314) ;
un troisième et un quatrième moyen de détection de code (309, 310), destinés à détecter des codes spéciaux dans lesdits troisième et quatrième signaux, lus dans lesdites troisième et quatrième mémoires FIFO (107, 108) et à fournir en sortie des signaux de détection ; et
un troisième et un quatrième moyen de commande (311, 312), destinés à interdire temporairement la lecture dans lesdites troisième et quatrième mémoires FIFO (107, 108) en fonction de la détection de codes par lesdits troisième et quatrième moyen de détection de codes (309, 310) et des taux d'occupation desdites troisième et quatrième mémoires FIFO, et à insérer lesdits codes spéciaux produits par lesdits premier et deuxième moyens de production de codes (313, 314) dans lesdits troisième et quatrième signaux d'émission à faible vitesse.

2. Répéteur multiplexeur selon la revendication 1, dans lequel lesdits premier et deuxième moyens de commande (305, 306) sont des moyens destinés à détecter que les taux d'occupation (MOC) desdites première et deuxième mémoires FIFO (105, 106) leur correspondant respectivement, dépassent une première valeur prédéterminée et à répondre à la fourniture en sortie desdits signaux de détection de codes spéciaux (IDL) par lesdits premier et deuxième moyens de détection de codes (303, 304) afin d'empêcher que lesdits codes spéciaux, dans lesdits premier et deuxième signaux d'émission à faible vitesse, soient écrits dans lesdites première et deuxième mémoires FIFO (105, 106).

3. Répéteur multiplexeur selon la revendication 1, dans lequel lesdits troisième et quatrième moyens de commande (311, 313) sont des moyens destinés à détecter que les taux d'occupation (MOC) desdites troisième et quatrième mémoires FIFO (107, 108) leur correspondant respectivement, sont inférieurs à une seconde valeur prédéterminée et à répondre à la fourniture en sortie desdits signaux de détection de codes spéciaux (IDL) par lesdits troisième et quatrième moyens de détection de codes (309, 310) afin d'empêcher la lecture dans lesdites troisième et quatrième mémoires FIFO (107, 108) et en commandant lesdits premier et deuxième sélecteurs (315, 316) pour qu'ils insèrent des codes spéciaux provenant desdits premier et deuxième moyens de production de codes (313, 314) dans lesdites troisième et quatrième signaux à faible vitesse.

4. Répéteur multiplexeur selon la revendication 1, dans lequel ladite partie de réception (100R) comprend :
un premier et un second moyen de production de codes (313, 314), destinés à produire des codes spéciaux ;
un premier et un second sélecteur (315, 316), destinés à fournir sélectivement les sorties provenant desdites troisième et quatrième mémoires FIFO (107, 108) et les codes spéciaux provenant desdits premier et deuxième moyens de production de codes (313, 314) à ladite interface à faible vitesse (10L) ;
un premier et un second moyen de détection d'intervalle entre trames (309a, 310a), destinés à détecter les intervalles entre trames dans lesdits troisième et quatrième signaux à faible vitesse lus dans lesdites troisième et quatrième mémoires FIFO et à fournir en sortie des signaux de détection ; et
un troisième et un quatrième moyen de commande (311 a, 312a), destinés à interdire temporairement la lecture dans lesdites troisième et quatrième mémoires FIFO (107, 108) en fonction des sorties détectées desdits premier et deuxième moyens de détection d'intervalle entre trames (309a, 310a) et des taux d'occupation desdites troisième et quatrième mémoires FIFO (107, 108) et à commander auxdits premier et second sélecteurs (315, 316) d'insérer lesdits codes spéciaux produits par lesdits premier et deuxième moyens de production de codes dans lesdits troisième et quatrième signaux d'émission à faible vitesse.

5. Répéteur multiplexeur selon la revendication 4, dans lequel : ladite partie de réception (100R) comprend une cinquième et une sixième mémoire FIFO (317, 318), dans lesquelles sont écrits des signaux lus dans lesdites troisième et quatrième mémoires FIFO (107, 108) et dans lesquelles les signaux qui y sont écrits sont lus et fournis en sortie auxdits premier et second sélecteurs (315, 316) ; lesdits premier et deuxième moyens de détection d'intervalles entre trames (309a, 310a) sont adaptés pour compter des codes pendant les intervalles entre trames desdits troisième et quatrième signaux d'émission à faible vitesse lus dans lesdites troisième et quatrième mémoires FIFO (107, 108) ; et, lorsque les valeurs de comptage sont inférieures à des valeurs prédéterminées, lesdits troisième et quatrième moyens de commande (311 a, 312a) interdisent la lecture dans lesdites cinquième et sixième mémoires FIFO (317, 318) et commandent auxdits premier et deuxième sélecteurs (315, 316) d'insérer lesdits codes spéciaux, produits par lesdits premier et deuxième moyens de production de codes (313, 314), dans lesdits troisième et quatrième signaux d'émission à faible vitesse.

6. Répéteur multiplexeur selon la revendication 1 , dans lequel lesdits premier et deuxième moyens de détection de codes (303, 304) sont adaptés pour compter des successions de codes spéciaux prédéterminés dans lesdits premier et second signaux d'émission à faible vitesse et à fournir en sortie lesdits signaux de détection lorsque les valeurs de comptage atteignent des valeurs prédéterminées.

7. Répéteur multiplexeur selon l'une quelconque des revendications 1 à 6, dans lequel :
ladite partie d'émission (100T) comprend un premier moyen d'inversion logique (201), implanté à la sortie de l'une desdites première et deuxième mémoires FIFO (105, 106), destiné à inverser l'état logique de l'un desdits premier et second signaux d'émission à faible vitesse lus dans l'une desdites première et deuxième mémoires FIFO et à fournir la sortie après inversion logique audit circuit de multiplexage (109) ; et
ladite partie de réception (100R) comprend :
un moyen de détection logique (205, 206), destiné à déterminer l'état logique de codes spéciaux prédéterminés dans lesdits troisième et quatrième signaux à faible vitesse décodés par ledit moyen de terminaison/démultiplexage de trames de signaux d'émission à grande vitesse (110, 112), à partir du signal optique d'émission reçu par ladite interface optique à grande vitesse ;
un deuxième moyen d'inversion logique (207, 208), qui répond au résultat de la décision dudit moyen de décision logique (205, 206) de façon à réinverser l'état logique de celui desdits troisième et quatrième signaux d'émission à faible vitesse dont il a été déterminé que son état logique était inversé ; et
un moyen de commutation (209), destiné à fournir en sortie chacun desdits troisième et quatrième signaux d'émission à faible vitesse à l'une desdites troisième et quatrième mémoires FIFO (107, 108), si l'état logique desdits troisième et quatrième signaux d'émission à faible vitesse a été inversé.

8. Répéteur multiplexeur selon l'une quelconque des revendications 1 à 6, dans lequel:
lesdits premier et deuxième signaux optiques d'émission à grande vitesse sont des signaux optiques d'émission possédant un réseau optique de transport, ci-après dénommé OTU1, une structure de trame définie par l'ITU-T G.709 et chacun desdits signaux d'émission à faible vitesse est un signal d'émission ayant une structure de trame Ethernet Gigabit, ci-après dénommée GbE, définie par la norme IEEE 802.3z ;
ledit moyen de production de trames de signaux optiques à grande vitesse (111) est un moyen de production de trames OTU destiné à placer une version multiplexée desdits premier et deuxième signaux GbE dans une charge utile OTU1 de ladite trame OTU1 et à fournir en sortie la sortie mappée de ladite interface optique à grande vitesse ;
ledit moyen de terminaison/démultiplexage de trames de signaux optiques d'émission à grande vitesse (110, 112) est un moyen de terminaison/démultiplexage de trames OTU1, destiné à décoder et démultiplexer les troisième et quatrième signaux GbE dans le signal d'émission de ladite structure de trame OTU1 reçue sur ladite interface optique à grande vitesse ; et
lesdits deuxième et troisième circuits d'émission de signal d'émission à faible vitesse (103, 104) sont chacun un circuit d'émission GbE qui reçoit un signal lu dans l'une desdites troisième et quatrième mémoires FIFO (107, 108) et qui fournir en sortie le signal d'entrée à ladite interface à faible vitesse.
